# EUROPÄISCHE PATENTSCHRIFT

(11) **EP 4 590 552 B1**
(45) Veröffentlichungstag und Bekanntmachung des Hinweises auf die Patenterteilung: **11.11.2026**
(21) Anmeldenummer: 23775997.2
(22) Anmeldetag: 19.09.2023
(51) Int. Cl.: B60R 7/04, B60R 13/01, B60R 22/18, B60N 2/28, B60N 2/58, B60N 2/60

(54) **ABDECKUNG UND FAHRZEUGINNENRAUMKOMPONENTE**
COVER AND VEHICLE INTERIOR COMPONENT
COUVERCLE ET COMPOSANT INTÉRIEUR DE VÉHICULE

(30) Priorität: 21.09.2022 DE 102022124207
(43) Veröffentlichungstag der Anmeldung: 30.07.2025
(73) Patentinhaber: AUDI AG, 85057 Ingolstadt (DE)
(72) Erfinder: BENLIYAN, Sarkis, 85049 Ingolstadt (DE); BIRKE, Sebastian, 85276 Pfaffenhofen an der Ilm (DE); GASTL, Andreas, 85114 Buxheim (DE)
(86) Internationale Anmeldenummer: PCT/EP2023/075795
(87) Internationale Veröffentlichungsnummer: WO 2024/061902

(56) Entgegenhaltungen:
- JP-A- 2009 137 520
- US-A1- 2009 212 610

## Beschreibung

Die Erfindung betrifft eine Abdeckung für einen Hohlraum, in welchem ein Gurtanker angeordnet ist, umfassend einen Anlagebereich, welcher zur Anlage an einer den Hohlraum umgebenden Oberfläche einer Fahrzeuginnenraumkomponente vorgesehen ist, wobei der Anlagebereich auf seiner im Anwendungsfall zu der den Hohlraum umgebenden Oberfläche hin gewandten Innenseite eine Anlagefläche aufweist und zumindest einen Öffnungsbereich, dessen im Anwendungsfall zum Hohlraum hin gewandte Innenfläche in einer Richtung senkrecht zur Anlagefläche von dieser beabstandet ist, wobei der Anlagebereich den Öffnungsbereich bereichsweise umgibt und mit diesem verbunden ist, wobei in einem Durchführungsbereich des Öffnungsbereiches der Anlagebereich den Öffnungsbereich nicht umgibt und dieser Durchführungsbereich den äußeren Rand der Abdeckung bildet. Die Abdeckung umfasst darüber hinaus zumindest zwei Befestigungselemente, die zur form- und/oder kraftschlüssigen Verbindung der Abdeckung mit dem Hohlraum vorgesehen sind. Die Erfindung betrifft weiterhin eine Fahrzeuginnenraumkomponente mit einer Abdeckung sowie ein Verfahren zur Anbringung eines Gurtes an einer Fahrzeuginnenraumkomponente.

Fahrzeuge umfassen oftmals Vorrichtungen, mit denen in einfacher Weise Transporteinrichtungen für Babys und Kinder im Fahrzeuginnenraum angebracht werden können. Weit verbreitet ist die sogenannte Isofix Befestigung für Kindersitze oder Babyschalen. Ergänzend oder alternativ dazu existieren Lösungen, bei denen ein Gurt zur Befestigung von Kindersitzen oder Babyschalen über den nach oben gewandten Rand eines Fahrzeugsitzes geführt und zur Befestigung genutzt wird. Solche Lösungen werden auch als Top-Tether-Befestigung bezeichnet. Bei einer solchen Befestigung wird ein Gurt von der Transporteinrichtung für Kinder an einer Fahrzeuginnenraumkomponente, beispielsweise einem Fahrzeugsitz, befestigt. Für diese Befestigung des Gurtes an der Fahrzeuginnenraumkomponente ist an dieser ein Gurtanker vorgesehen, der in einfacher Weise erreichbar ist und eine schnelle und einfache Anbringung des Gurtes ermöglicht. Da eine Anbringung einer Transporteinrichtung für Kinder im Fahrzeug nicht immer erforderlich ist, besteht die Anforderung, einen solchen Gurtanker geschützt und unauffällig im Fahrzeuginnenraum zu integrieren. Der Gurtanker soll zum einen gut erreichbar sein und zum anderen vor Beschädigungen und Verschmutzungen geschützt sein. Weiterhin soll der Gurtanker so angeordnet sein, dass keine Verletzungsgefahr für Passagiere im Fahrzeug besteht.

In US 2020/0331401 A1 wird eine Vorrichtung beschrieben, welche in der Umgebung eines Gurtankers angeordnet ist. Diese Vorrichtung umfasst einen klappbaren Haken, der bei Nichtgebrauch des Gurtankers als Abdeckung verwendet werden kann.

JP 2008 273430 A offenbart ebenfalls eine Komponente, welche einen Gurtanker umgibt. Diese Komponente umfasst einen klappbaren Deckel, welcher bei Nichtgebrauch des Gurtankers in einer ersten Stellung und bei Gebrauch des Gurtankers in einer zweiten Stellung fixierbar ist.

In JP 2009 137520 A wird eine klappbare Abdeckung für einen Gurtanker beschrieben. Diese Abdeckung ist über ein Filmscharnier mit der benachbarten Innenraumoberfläche verbunden und somit in diese integriert.

US 2009/0212610 A1 offenbart einen Fahrzeugsitz mit einem Fach zur Aufbewahrung kleiner Gegenstände. Das Fach wird durch eine flexible Abdeckung in der Sitzlehne verschlossen.

Die bekannten Vorrichtungen zur Abdeckung eines Gurtankers umfassen mehrere Einzelteile und sind somit komplex aufgebaut. Darüber hinaus besteht bei diesen Lösungen, insbesondere bei den klappbaren Teilbereichen der Vorrichtungen, die Gefahr einer Beschädigung im alltäglichen Gebrauch.

Die Aufgabe der Erfindung besteht somit darin, Lösungen vorzuschlagen, mit denen ein Gurtanker stabiler und einfacher in ein Fahrzeug integriert werden kann, wobei der Gurtanker geschützt und in einfacher Weise erreichbar sein soll.

Die Aufgabe der Erfindung wird gelöst durch eine Abdeckung für einen Hohlraum, in welchem ein Gurtanker angeordnet ist, umfassend
- einen Anlagebereich, welcher zur Anlage an einer den Hohlraum umgebenden Oberfläche einer Fahrzeuginnenraumkomponente vorgesehen ist, wobei der Anlagebereich auf seiner im Anwendungsfall zu der den Hohlraum umgebenden Oberfläche hin gewandten Innenseite eine Anlagefläche aufweist,
- zumindest einen Öffnungsbereich, dessen im Anwendungsfall zum Hohlraum hin gewandte Innenfläche in einer Richtung senkrecht zur Anlagefläche von dieser beabstandet ist, wobei der Anlagebereich den Öffnungsbereich bereichsweise umgibt und mit diesem verbunden ist, wobei in einem Durchführungsbereich des Öffnungsbereiches der Anlagebereich den Öffnungsbereich nicht umgibt und dieser Durchführungsbereich den äußeren Rand der Abdeckung bildet,
- zumindest zwei Befestigungselemente, die zur form- und/oder kraftschlüssigen Verbindung der Abdeckung mit dem Hohlraum vorgesehen sind, wobei die Befestigungselemente in auf der dem Öffnungsbereich gegenüberliegenden Seite über die Anlagefläche vorstehen,

wobei eine Durchführungsebene den Durchführungsbereich halbiert und senkrecht zur der an die an den Durchführungsbereich angrenzenden Anlagefläche orientiert ist und die Befestigungselemente auf einander gegenüberliegenden Seiten der Durchführungsebene im gleichen Abstand zur Durchführungsebene angeordnet sind,
wobei in einer Richtung parallel zur Durchführungsebene und parallel zur Auflagefläche die Abdeckung auf einer ersten Seite durch den Durchführungsbereich und auf einer der ersten Seite gegenüberliegenden zweiten Seite durch den Anlagebereich begrenzt ist.

Die erfindungsgemäße Abdeckung ist dazu vorgesehen, einen Hohlraum in einer Fahrzeuginnenraumkomponente, in welchem ein Gurtanker angeordnet ist, abzudecken. Die erfindungsgemäße Abdeckung besteht aus einem einzigen Bauteil, welches in einfacher Weise herstellbar und verwendbar ist.

Die Abdeckung umfasst einen Anlagebereich, welcher den Bereich bildet, welcher im Anwendungsfall an der den Hohlraum umgebenden Oberfläche aufliegt. Unter Anwendungsfall ist dabei jeder Zustand zu verstehen, in dem die Abdeckung den Hohlraum zumindest bereichsweise verschließt. Im Anwendungsfall kann der Gurtanker mit einem Gurt verbunden sein oder der Gurtanker nicht mit einem Gurt verbunden sein. Der Anlagebereich umfasst eine im Anwendungsfall zur Fahrzeuginnenraumkomponente hin gewandte Anlagefläche. Bevorzugt ist diese Anlagefläche komplementär zur Form der umgebenden Oberfläche der Fahrzeuginnenraumkomponente geformt. Die Anlagefläche liegt im Anwendungsfall auf der umgebenden Oberfläche bündig auf. Die Abdeckung umfasst weiterhin einen Öffnungsbereich, welcher benachbart zum Anlagebereich angeordnet ist, wobei beide Bereiche miteinander verbunden sind. Die im Anwendungsfall zum Hohlraum hin gewandte Innenfläche ist beabstandet zur Anlagefläche angeordnet. Die Innenfläche ist im Anwendungsfall somit beabstandet zu der den Hohlraum umgebenden Oberfläche der Fahrzeuginnenraumkomponente angeordnet und ermöglicht somit die Durchführung eines Gurtes zwischen der Abdeckung und der umgebenden Oberfläche. Der Anlagebereich umgibt bereichsweise den Öffnungsbereich und geht dort in diesen über. In einem Durchführungsbereich des Öffnungsbereiches umgibt der Anlagebereich den Öffnungsbereich jedoch nicht, was bedeutet, dass dieser Durchführungsbereich am äußeren Rand der Abdeckung angeordnet ist. Im Anwendungsfall besteht somit im Durchführungsbereich ein Abstand zwischen der Innenfläche und der den Hohlraum umgebenden Oberfläche, welcher zur Durchführung eines Gurtes genutzt werden kann. Die Abdeckung umfasst weiterhin zumindest zwei Befestigungselemente, welche im Anwendungsfall in Wirkverbindung mit dem Hohlraum treten und die Abdeckung lösbar mit dem Hohlraum verbinden. Die Befestigungselemente können beispielsweise als Clip- oder Einrastelemente ausgeführt sein, welche mit dem Hohlraum form- und/oder kraftschlüssig zusammenwirken. Eine gedachte Durchführungsebene dient der vereinfachten Beschreibung der Form der erfindungsgemäßen Abdeckung. Die Durchführungsebene halbiert den Durchführungsbereich und ist gleichzeitig senkrecht zu dem Teilbereich der Anlagefläche orientiert, welcher benachbart zum Durchführungsbereich angeordnet ist. Der Durchführungsbereich bildet einen Teil des Außenrandes der Abdeckung. Die Durchführungsebene halbiert den Durchführungsbereich in einer Draufsicht auf den Teilbereich des Außenrandes der Abdeckung, in dem der Durchführungsbereich angeordnet ist. Die Durchführungsebene ist bevorzugt auch die Mittelebene des Öffnungsbereiches. Erfindungsgemäß sind die beiden Befestigungselemente jeweils auf einer Seite der Durchführungsebene angeordnet, wobei der Abstand der Befestigungselemente zur Durchführungsebene identisch ist. Die erfindungsgemäße Abdeckung ist in einer Richtung parallel zur Durchführungsebene und gleichzeitig parallel zur Auflagefläche, insbesondere zur Auflagefläche in dem Teilbereich, der direkt an den Durchführungsbereich angrenzt, auf einer ersten Seite durch den Durchführungsbereich begrenzt. Das bedeutet, dass in dieser Richtung ein Außenrand der Abdeckung durch den Durchführungsbereich gebildet wird. Auf der gegenüberliegenden Seite in dieser Richtung wird die Abdeckung durch einen Teilbereich des Anlagebereiches begrenzt. Dadurch liegt im Anwendungsfall die Abdeckung auf der ersten Seite, wo sich der Durchführungsbereich befindet, nicht an der umgebenden Oberfläche an. Auf der gegenüberliegenden Seite der Abdeckung liegt diese jedoch bündig an der umgebenden Oberfläche auf. Dadurch ergibt sich auf einer Seite der Abdeckung im Anwendungsfall eine Öffnung zur Durchführung eines Gurtes, wogegen die gegenüberliegende Seite bündig an der Fahrzeuginnenraumkomponente aufliegt und somit den Hohlraum verschließt.

Die erfindungsgemäße Abdeckung hat den Vorteil, dass diese durch ein einziges Bauteil gebildet ist. Die Befestigungselemente sind bevorzugt elastisch verformbar ausgeführt, so dass keine beweglich zueinander gelagerten Teile vorhanden sind, die im Gebrauch beschädigt werden können. Dadurch, dass die beiden Befestigungselemente im gleichen Abstand zur Durchführungsebene angeordnet sind, kann die Abdeckung in zwei verschiedenen Stellungen an einer Fahrzeuginnenraumkomponente angebracht werden. **In** der Nichtbenutzungsstellung kann die Abdeckung dazu verwendet werden, den Hohlraum und den darin angeordneten Gurtanker abzudecken und zu schützen, solange kein Gurt am Gurtanker befestigt ist. **In** der Benutzungsstellung, in der ein Gurt am Gurtanker befestigt ist, kann die Abdeckung ebenfalls dazu genutzt werden, den Hohlraum und den Gurtanker zu schützen, wobei gleichzeitig in einfacher Weise der Gurt zwischen der Abdeckung und der umgebenden Oberfläche der Fahrzeuginnenraumkomponente durchgeführt werden kann. Der Wechsel zwischen diesen beiden Stellungen ist durch eine einfache Entnahme, eine Drehung der Abdeckung und eine anschließende Wiedereinsetzung vorzunehmen. Die erfindungsgemäße Abdeckung bewirkt somit eine stabile und einfache Integration eines Gurtankers in einer Fahrzeuginnenraumkomponente, wobei die Abdeckung die Funktionssicherheit des Gurtankers sowohl bei angebrachtem Gurt als auch ohne angebrachtem Gurt stets aufrecht erhält. Gegenüber bekannten Lösungen ist der Aufbau der Abdeckung deutlich einfacher, wodurch die Abdeckung kostengünstig bereitgestellt werden kann. Dadurch, dass die Abdeckung auch dann zum Verschließen des Hohlraumes genutzt werden kann, wenn ein Gurt am Gurtanker angeordnet ist, ist sichergestellt, dass diese nicht verloren gehen kann. Der Durchführungsbereich vereinigt dabei zwei Funktionen: in der Nichtbenutzungsstellung kann der Durchführungsbereich zur erleichterten Entnahme der Abdeckung vom Hohlraum genutzt werden, indem dieser als Griff dient, in den ein oder mehrere Finger zur Entnahme eingeführt werden können. In der Benutzungsstellung kann ein am Gurtanker angebrachter Gurt durch den Durchführungsbereich geführt werden, ohne dass dieser zwischen der Abdeckung und der umgebenden Oberfläche des Hohlraumes eingeklemmt wird. Durch das Vorsehen der beiden Befestigungselemente, welche zur Abdeckung gehören und welche mit dieser verbunden sind, fallen keine zusätzlichen Befestigungselemente an. Dadurch kann die Abdeckung sehr einfach vom Hohlraum entnommen und wieder in diesen eingesetzt werden.

In einer Ausführungsform ist vorgesehen, dass der Anlagebereich und der Öffnungsbereich zusammen eine gewölbte Schale bilden und sich die beiden Befestigungselemente in die der Wölbung entgegengesetzte Richtung weg von der Anlagefläche erstrecken, wobei die Befestigungselemente am Anlagebereich oder am Öffnungsbereich befestigt sind. Unter einer Schale ist dabei ein Bauteil zu verstehen, welches eine signifikant geringere Dicke als Breite und Länge aufweist. Beispielsweise ist die Dicke zumindest um den Faktor zehn geringer als die Länge und/oder Breite der als Schale ausgeführten Abdeckung. Der Öffnungsbereich bildet in dieser Ausführungsform relativ zum Anlagebereich eine Wölbung, welche im Anwendungsfall über die den Hohlraum umgebende Oberfläche und über den Anlagebereich vorsteht. Die Wölbung erstreckt sich in die entgegengesetzte Richtung zu den Befestigungselementen. Diese Ausführungsform weist ein besonders geringes Gewicht auf. Vorteilhaft ist weiterhin, dass die Wölbung so gestaltet werden kann, dass sie sich optisch harmonisch in das Erscheinungsbild des Fahrzeuginneren integriert.

**In** einer weiteren Ausführungsform ist vorgesehen, dass in einer Draufsicht auf die Anlagefläche der Anlagebereich den Öffnungsbereich in Umfangsrichtung um die Abdeckung um zumindest 75% der Umfangslänge umgibt und der Durchführungsbereich den Rand der Abdeckung im restlichen Bereich der Umfangslänge bildet. Unter Umfangsrichtung ist die Richtung zu verstehen, welche tangential zum äußeren Rand der Abdeckung orientiert ist. Die Abdeckung weist in dieser Umfangsrichtung eine Umfangslänge auf. In dieser Ausführungsform wird zumindest 75 % der Umfangslänge durch den Anlagebereich gebildet, der in diesem Bereich der Umfangslänge den äußeren Rand der Abdeckung bildet. Der restliche Bereich der Umfangslänge wird durch den Durchführungsbereich gebildet. Bei einer in der Draufsicht rechteckig ausgeführten Abdeckung können beispielsweise drei Außenseiten durch den Anlagebereich und die vierte Außenseite durch den Durchführungsbereich gebildet sein. Auf diese Weise ist gleichzeitig ein guter Schutz des Hohlraums vor Verschmutzung und eine sichere Durchführbarkeit eines Gurtes aus dem Hohlraum heraus sichergestellt.

Optional ist vorgesehen, dass die Anlagefläche des Anlagebereiches stetig in die Innenfläche des Öffnungsbereiches übergeht. Auf diese Weise befinden sich an der im Anwendungsfall in Richtung des Hohlraumes orientierten Seite der Abdeckung keine scharfen Kanten, was die Durchführung des Gurtes aus dem Hohlraum heraus begünstigt.

In einer Ausführungsform ist vorgesehen, dass der Abstand zwischen der Anlagefläche des Anlagebereiches und der Innenfläche des Öffnungsbereiches entlang der Durchführungsebene in Richtung hin zum Durchführungsbereich zunimmt. In dieser Ausführungsform vergrößert sich der Abstand der Innenfläche von der Anlagefläche entlang der Durchführungsebene. Bevorzugt ist dieser Abstand im Durchführungsbereich maximal. Dieser Abstand kann sich kontinuierlich entlang der Durchführungsebene vergrößern. Es ist jedoch auch möglich, dass der Abstand bereichsweise entlang der Durchführungsebene konstant ist und erst kurz vor dem Durchführungsbereich, beispielsweise im letzten Viertel der Länge des Öffnungsbereiches, zunimmt. Der Verlauf dieses Abstandes kann in einfacher Weise daran angepasst werden, wo sich im Hohlraum der Gurtanker befindet und in welche Richtung der Gurt ausgehend von der Abdeckung weitergeführt werden soll. Unabhängig von diesem Abstand zwischen den Innenflächen der Auflagefläche kann der Abstand zwischen der Auflagefläche und der vom Hohlraum weg gewandten Oberfläche von Anlagebereich und Öffnungsbereich gewählt werden. Beispielsweise kann die vom Hohlraum weg gewandte Oberfläche über die gesamte Abdeckung einen konstanten Abstand zur Auflagefläche aufweisen. Alternativ ist es möglich, dass die vom Hohlraum weg gewandte Oberfläche der Abdeckung parallel zu der zum Hohlraum hin gewandten Oberfläche der Abdeckung verläuft.

**In** einer weiteren Ausführungsform ist vorgesehen, dass die Befestigungselemente angrenzend an die Anlagefläche symmetrisch zur Durchführungsebene angeordnet sind oder dass die Abdeckung komplett symmetrisch zur Durchführungsebene ausgeführt ist. **In** dieser Ausführungsform sind zumindest die Befestigungselemente symmetrisch zur Durchführungsebene angeordnet. Dies begünstigt ein identisches Verhalten beim Einbringen der Abdeckung in den Hohlraum, insbesondere in den unterschiedlichen Stellungen Benutzungsstellung und Nichtbenutzungsstellung. So können beispielsweise im Hohlraum lokal Verbindungselemente angeordnet sein, welche mit den Befestigungselementen bei der Befestigung der Abdeckung zusammenwirken. Durch die symmetrische Anordnung der Befestigungselemente können in zwei unterschiedlichen Drehpositionen der Abdeckung die gleichen Befestigungselemente im Hohlraum als Gegenstück genutzt werden. In einer bevorzugten Ausführungsform ist die gesamte Abdeckung symmetrisch zur Durchführungsebene geformt. Dadurch wird ein besonders harmonisches Erscheinungsbild in beiden Stellungen erreicht.

Optional ist vorgesehen, dass die Anlagefläche plan oder um zumindest eine Krümmungsachse, welche senkrecht zur Durchführungsebene orientiert ist, gekrümmt ausgeführt ist. Die Anlagefläche, welche für den Kontakt mit einer den Hohlraum umgebenen Oberfläche vorgesehen ist, ist bevorzugt formkomplementär zu dieser Oberfläche ausgeführt. Ist die Oberfläche plan, so kann die Anlagefläche ebenfalls plan ausgeführt sein. Ist die Oberfläche jedoch gekrümmt, beispielsweise um eine horizontal orientierte Krümmungsachse, so kann die Anlagefläche ebenfalls um eine Achse gekrümmt sein. Dabei ist der Krümmungsradius der Anlagefläche bevorzugt identisch zum Krümmungsradius der Oberfläche. Es ist auch möglich, dass die Anlagefläche bereichsweise plan und bereichsweise gekrümmt ausgeführt ist. Durch eine formkomplementäre Ausführung der Anlagefläche zur Oberfläche ist sichergestellt, dass der Anlagebereich stets bündig an der Oberfläche anliegt und so ein Eindringen von Verschmutzungen in den Hohlraum vermieden wird.

Die Aufgabe der Erfindung wird weiterhin gelöst durch eine Fahrzeuginnenraumkomponente mit einem Gurtanker, wobei der Gurtanker in einem nach außen offenen Hohlraum in der Fahrzeuginnenraumkomponente angeordnet ist und dieser Hohlraum zumindest bereichsweise von einer Oberfläche der Fahrzeuginnenraumkomponente umgeben ist, wobei eine Abdeckung nach einer der zuvor beschriebenen Ausführungsformen den Hohlraum zumindest bereichsweise verschließt,
wobei die Anlagefläche des Anlagebereiches auf der den Hohlraum umgebenden Oberfläche aufliegt, die beiden Befestigungselemente zumindest bereichsweise in den Hohlraum eingebracht sind und zwischen dem Durchführungsbereich des Öffnungsbereiches und der den Hohlraum umgebenden Oberfläche eine Öffnung vorhanden ist, welche zur Durchführung eines Gurtes und zur Entnahme der Abdeckung aus dem Hohlraum vorgesehen ist.

Die erfindungsgemäße Fahrzeuginnenraumkomponente umfasst einen Gurtanker, der in einem Hohlraum der Fahrzeuginnenkomponente angeordnet ist und der von einer Abdeckung nach einer der zuvor beschriebenen Ausführungsformen abgedeckt ist. Bei der Fahrzeuginnenraumkomponente kann es sich beispielsweise um einen Fahrzeugsitz handeln. Alternativ kann die Fahrzeuginnenraumkomponente auch durch eine Konsole, eine Karosserieverkleidung oder Ähnliches gebildet sein. Der Hohlraum ist zumindest bereichsweise von einer Oberfläche umgeben, welche an den Hohlraum angrenzt. Die Abdeckung ist mit ihren Befestigungselementen in den Hohlraum eingebracht und liegt mit ihrer Anlagefläche auf der Oberfläche bereichsweise auf. Durch die Formgebung der Abdeckung besteht im eingebrachten Zustand der Abdeckung eine Öffnung zwischen der den Hohlraum umgebenden Oberfläche und dem Durchführungsbereich. Diese Öffnung ist dazu vorgesehen, einen Gurt von dem im Hohlraum befindlichen Gurtanker unter der Abdeckung hindurch nach außen zu führen.

Die erfindungsgemäße Fahrzeuginnenraumkomponente ermöglicht es, einen Gurtanker stabiler und einfacher als bei bekannten Lösungen in ein Fahrzeug zu integrieren. Der Gurtanker ist dabei in einem Hohlraum angeordnet und durch eine erfindungsgemäße Abdeckung geschützt. Darüber hinaus bewirkt die Abdeckung eine Verdeckung des Gurtankers, so dass sich dieser nicht störend auf das Erscheinungsbild des Fahrzeuginneren auswirkt. Die erfindungsgemäße Abdeckung stellt eine sehr einfache und kostengünstige Lösung zum Abdecken des Hohlraums dar. Die Abdeckung lässt sich in zwei unterschiedlichen Stellungen in den Hohlraum einbringen und sowohl bei Anbringung eines Gurtes als auch ohne Anbringung eines Gurtes im Hohlraum befestigen. Auf diese Weise kann die Abdeckung nicht verloren gehen und die erfindungsgemäße Fahrzeuginnenraumkomponente bleibt mit ihrer gesamten Funktionalität dauerhaft erhalten.

In einer Ausführungsform der Fahrzeuginnenraumkomponente ist vorgesehen, dass eine Benutzungsstellung der Abdeckung vorgesehen ist, in der der Durchführungsbereich in vertikaler Richtung nach oben weist und weiterhin eine Nichtbenutzungsstellung der Abdeckung vorgesehen ist, in der der Durchführungsbereich in vertikaler Richtung nach unten weist, wobei die Abdeckung von der Benutzungsstellung in die Nichtbenutzungsstellung und umgekehrt durch eine Entnahme der Abdeckung aus dem Hohlraum, eine Drehung der Abdeckung um eine Drehachse parallel zur Durchführungsebene und senkrecht zur Anlagefläche um 180° und ein Wiedereinsetzen in den Hohlraum überführbar ist. Die Abdeckung der Fahrzeuginnenraumkomponente kann in zwei unterschiedlichen Stellungen mit dem Hohlraum verbunden werden. Die Benutzungsstellung ist für einen Anwendungsfall vorgesehen, in dem ein Gurt mit dem Gurtanker verbunden ist. Die Nichtbenutzungsstellung ist für einen Anwendungsfall vorgesehen, in dem kein Gurt mit dem Gurtanker verbunden ist. Die Befestigung der Abdeckung erfolgt in beiden Stellungen in gleicher Weise, lediglich die Drehorientierung der Abdeckung relativ zur Oberfläche ist unterschiedlich. Ein Wechsel zwischen beiden Stellungen ist in einfacher Weise durch einen Wechsel der Orientierung der Abdeckung relativ zu der den Hohlraum umgebenden Oberfläche möglich.

Die Aufgabe der Erfindung wird schließlich gelöst durch ein Verfahren zur Anbringung eines Gurtes an einer Fahrzeuginnenraumkomponente nach einer der zuvor beschriebenen Ausführungsformen bei dem sich zu Beginn des Verfahrens die Abdeckung in einer Nichtbenutzungsstellung befindet, in der der Durchführungsbereich in vertikaler Richtung nach unten weist, umfassend die Schritte
A) Entnahme der Abdeckung aus dem Hohlraum, wobei der Durchführungsbereich als Entnahmehilfe dient,
B) Anbringung eines Gurtes an dem im Hohlraum befindlichen Gurtanker,
C) Ausrichtung der Abdeckung derart, dass die Anlagefläche parallel zu der den Hohlraum umgebenden Oberfläche und der Durchführungsbereich in vertikaler Richtung nach oben orientiert ist,
D) Wiedereinsetzen der Abdeckung, nach diesem sich die Abdeckung in einer Benutzungsstellung befindet, wobei bei dem Wiedereinsetzen die Befestigungselemente in den Hohlraum eingeführt und die Anlagefläche in Kontakt mit der den Hohlraum umgebenden Oberfläche gebracht wird, wobei der Gurt durch die Öffnung zwischen der den Hohlraum umgebenden Oberfläche und dem Durchführungsbereich geführt wird.

Das erfindungsgemäße Verfahren dient der einfachen Anbringung eines Gurtes an einer Fahrzeuginnenraumkomponente. Die Vorteile des Verfahrens entstehen daraus, dass der Gurtanker durch die Abdeckung in der Fahrzeuginnenraumkomponente besonders gut integriert und bei der Anbringung des Gurtes in einfacher Weise erreichbar ist.

Das erfindungsgemäße Verfahren geht von einem Zustand aus, in dem sich die Fahrzeuginnenraumkomponente in einer Nichtbenutzungsstellung befindet und in die Benutzungsstellung überführt werden soll. Das erfindungsgemäße Verfahren kann in umgekehrter Reihenfolge der Verfahrensschritte durchgeführt werden und dient dann der Überführung von der Benutzungsstellung in die Nichtbenutzungsstellung.

In einem ersten Verfahrensschritt A) wird die Abdeckung aus dem Hohlraum entnommen, wobei die Öffnung zwischen dem Durchführungsbereich und der umgebenden Oberfläche dazu genutzt werden kann, einen oder mehrere Finger einzubringen und so die Abdeckung aus dem Hohlraum herauszuziehen.

In einem zweiten Verfahrensschritt B) wird nun ein Gurt an dem Gurtanker angebracht. Dieses Anbringen ist besonders einfach, da bei diesem Verfahrensschritt die Abdeckung komplett entfernt ist und den Zugang zum Hohlraum nicht behindert.

In einem dritten Verfahrensschritt C) wird die Abdeckung auf das Wiedereinsetzen vorbereitet, wobei diese so gedreht wird, dass der Durchführungsbereich vertikal nach oben orientiert ist.

Anschließend wird in einem vierten Verfahrensschritt D) die Abdeckung wieder in den Hohlraum eingesetzt, wobei der Gurt durch die Öffnung zwischen dem Durchführungsbereich und der dem Hohlraum umgebenden Oberfläche geführt wird. Auf diese Weise ist der Gurt zwischen der Abdeckung und der Oberfläche frei beweglich und wird nicht eingeklemmt.

Das erfindungsgemäße Verfahren ist in einfacher Weise durchzuführen. Aufgrund der einfachen Konstruktion und der stabilen Ausführung der Abdeckung kann dieses Verfahren oftmals durchgeführt werden, bevor signifikanter Verschleiß an der Fahrzeuginnenraumkomponente auftritt.

Merkmale, Wirkungen und Vorteile, welche in Zusammenhang mit der Abdeckung offenbart sind, gelten auch in Zusammenhang mit der Fahrzeuginnenraumkomponente und dem Verfahren als offenbart. Gleiches gilt in umgekehrter Richtung, Merkmale, Wirkungen und Vorteile, welche in Zusammenhang mit der Fahrzeuginnenraumkomponente und dem Verfahren offenbart sind, gelten auch im Zusammenhang mit der Abdeckung als offenbart.

Die Erfindung ist anhand von Ausführungsformen in den Zeichnungen schematisch dargestellt und wird unter Bezugnahme auf die Zeichnungen weiter beschrieben. Es zeigen:
- Figur 1: in einer perspektivischen Darstellung eine Ausführungsform einer Abdeckung gemäß der Erfindung,
- Figur 2: in einer schematischen Ansicht eine Ausführungsform einer Fahrzeuginnenraumkomponente gemäß der Erfindung in der Nichtbenutzungsstellung,
- Figur 3: in einer schematischen Ansicht die Ausführungsform aus Figur 2 in der Benutzungsstellung.

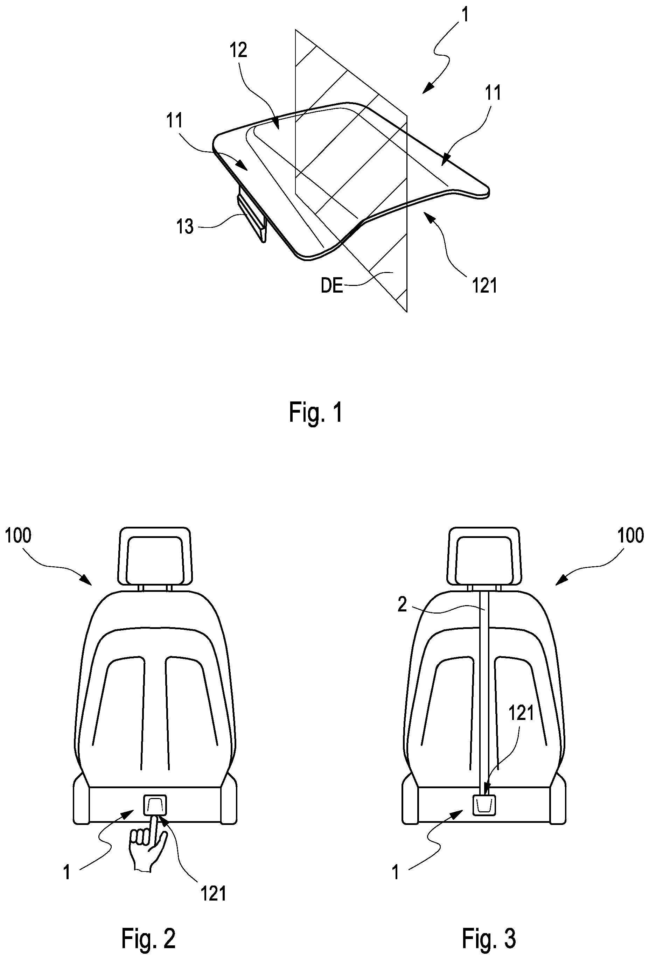

Figur 1 zeigt in einer perspektivischen Darstellung eine Ausführungsform einer Abdeckung 1 gemäß der Erfindung. In der dargestellten Ausführungsform ist die Abdeckung 1 als gewölbte Schale ausgeführt. In der Mitte der Abdeckung 1 befindet sich der Öffnungsbereich 12, welcher in der Darstellung nach oben gewölbt ist. Der Öffnungsbereich 12 ist in der dargestellten Ausführungsform auf drei von vier Seiten vom Anlagebereich 11 umgeben. In der dargestellten Ausführungsform ist der Anlagebereich 11 nicht gewölbt sondern umlaufend plan ausgeführt. Auf der in der Darstellung nach unten weisenden Seite des Anlagebereiches 11 ist die Anlagefläche angeordnet, welche im Anwendungsfall in Kontakt mit einer einen Hohlraum umgebenden Oberfläche einer Fahrzeuginnenraumkomponente 100 kommt. Die Abdeckung umfasst insgesamt zwei Befestigungselemente 13, welche in der Darstellung nach unten über die Anlagefläche vorstehen. Diese Befestigungselemente dringen im Anwendungsfall in den Hohlraum ein und fixieren die Abdeckung 1 im Hohlraum form- und/oder kraftschlüssig. In der Darstellung ist lediglich eines der beiden Befestigungselemente 13 zu sehen, dass andere Befestigungselement 13 befindet sich auf der rechten Seite und ist durch den Anlagebereich 11 und den Öffnungsbereich 12 verdeckt. Der Öffnungsbereich 12 weist eine in der Darstellung nach unten gewandte Innenfläche auf, welche in eine Richtung senkrecht zur Anlagefläche von dieser beabstandet ist. In der dargestellten Ausführungsform umgibt der Anlagebereich den Öffnungsbereich auf drei von vier Seiten, was in etwa 85 % der Umfangslänge der gesamten Abdeckung 1 entspricht. Im restlichen Bereich der Umfangslänge bildet der Durchführungsbereich 121 den äußeren Rand der Abdeckung 1. Im Anwendungsfall, in dem die Abdeckung 1 auf oder in einen Hohlraum eingebracht ist, besteht im Bereich des Durchführungsbereiches 121 eine Öffnung zwischen der Abdeckung 1 und der umgebenden Oberfläche der Fahrzeuginnenraumkomponente 100. Die beiden Möglichkeiten zur Nutzung dieser Öffnung sind in den Figuren 2 und 3 dargestellt. Die gedachte Durchführungsebene DE halbiert den Durchführungsbereich 121, betrachtet in einer Draufsicht auf den Durchführungsbereich 121 von vorne rechts auf die Abdeckung 1. Gleichzeitig ist die Durchführungsebene DE senkrecht zur Anlagefläche des Anlagebereiches 11 orientiert. Die beiden Befestigungselemente 13 sind auf einander gegenüberliegenden Seiten der Durchführungsebene DE im gleichen Abstand zur Durchführungsebene DE angeordnet. In der dargestellten Ausführungsform sind die beiden Befestigungselemente 13 symmetrisch zur Durchführungsebene DE angeordnet. Darüber hinaus ist die gesamte Abdeckung in der dargestellten Ausführungsform symmetrisch zur Durchführungsebene DE ausgebildet. Besonders vorteilhaft an der Abdeckung 1 ist, dass diese gleichermaßen in zwei unterschiedlichen Stellungen zur Abdeckung eines Hohlraumes verwendet werden kann. Entspricht die in Figur 1 dargestellte Orientierung beispielsweise der Nichtbenutzungsstellung aus Figur 2, kann die Abdeckung 1 durch eine einfache Drehung um eine Achse senkrecht zur Auflagefläche in die in Figur 3 dargestellte Benutzungsstellung überführt werden. In der in Figur 1 dargestellten Perspektive würde der Durchführungsbereich 121 in der Benutzungsstellung nach hinten links weisen, wogegen der in der aktuellen Darstellung in Figur 1 nach hinten links weisende Bereich der Abdeckung nach vorne rechts weisen würde, dorthin wo in der Darstellung der Durchführungsbereich 121 weist. In der dargestellten Ausführungsform ist die Abdeckung 1 als Kunststoffspritzteil ausgeführt, welches kostengünstig hergestellt werden kann.

In einer Richtung parallel oder entlang der Durchführungsebene DE und gleichzeitig parallel zur Anlagefläche, welche in der Darstellung von vorne rechts nach hinten links verläuft, wird die Abdeckung 1 auf einer ersten Seite durch den Rand begrenzt, welcher durch den Durchführungsbereich 121 gebildet wird. Diese erste Seite ist in der Darstellung nach vorne rechts orientiert. In dieser Richtung auf der gegenüberliegenden zweiten Seite, welche in der Darstellung nach hinten links orientiert ist, wird die Abdeckung 1 durch den Anlagebereich 11 begrenzt, welcher auf dieser zweiten Seite den äußeren Rand der Abdeckung 1 bildet. Ausgehend von der zweiten Seite, hinten links in der Darstellung, entlang der Durchführungsebene DE nimmt der Abstand zwischen der Anlagefläche und der Innenfläche des Öffnungsbereiches 12 in der dargestellten Ausführungsform zu. Dieser Abstand ist im Durchführungsbereich 121 am größten. Durch diesen zunehmenden Abstand entlang der Durchführungsebene DE wird die Durchführung eines Gurtes begünstigt und sichergestellt, dass der Gurt im Anwendungsfall nicht zwischen der Abdeckung 1 und dem Gurtanker oder der den Hohlraum umgebenden Oberfläche eingeklemmt wird. In der dargestellten Ausführungsform ist die Wandstärke des Anlagebereiches 11 und das Öffnungsbereiches 12 über die gesamte Fläche der Abdeckung 1 im Wesentlichen konstant und der Anlagebereich 11 geht stetig in den Öffnungsbereich 12 über. Alternativ ist es auch möglich, dass die Wandstärke über die Abdeckung 1 variiert und beispielsweise im Anlagebereich 11 größer ist als im Öffnungsbereich 12. Durch Variation der Wandstärke kann das optische Erscheinungsbild der Abdeckung 1 variiert werden und diese so an die Umgebung im Fahrzeuginneren angepasst werden.

Figur 2 zeigt in einer schematischen Ansicht eine Ausführungsform einer Fahrzeuginnenraumkomponente 100 gemäß der Erfindung in der Nichtbenutzungsstellung. In der dargestellten Ausführungsform wird die Fahrzeuginnenraumkomponente 100 durch einen Fahrzeugsitz gebildet, welche einen Hohlraum mit einem darin angeordneten Gurtanker aufweist. Dieser Hohlraum ist in Fahrtrichtung hinten im unteren Bereich des Fahrzeugsitzes angebracht. Der Hohlraum ist komplett von einer Oberfläche der Fahrzeuginnenraumkomponente 100 umgeben, welche hier beispielsweise durch eine plane Fläche, die mit Stoff bespannt ist, gebildet sein kann. Der Hohlraum ist durch eine Abdeckung 1 verschlossen, welche in einfacher Weise aus dem Hohlraum entfernt und wieder in diesen eingesetzt werden kann. Die Anlagefläche des Anlagebereiches 11 der Abdeckung 1 liegt an der den Hohlraum umgebenden Oberfläche auf und die beiden Befestigungselemente 13 sind bereichsweise in den Hohlraum eingebracht und mit diesem form- und/oder kraftschlüssig verbunden. Der Durchführungsbereich 121 ist in der in Figur 2 dargestellten Nichtbenutzungsstellung nach unten orientiert. Somit ist die Öffnung, welche zwischen dem Durchführungsbereich 121 und der den Hohlraum umgebenden Oberfläche vorliegt, in dieser Stellung ebenfalls nach unten orientiert. Dadurch ist der Hohlraum sehr gut durch die Abdeckung 1 gegen Verschmutzung geschützt, insbesondere Objekte, die von oben herab fallen, können nicht in den Hohlraum eindringen. Die dargestellte Nichtbenutzungsstellung der Abdeckung 1 oder der Fahrzeuginnenraumkomponente 100 wird dann gewählt, wenn kein Gurt 2 mit dem Gurtanker im Hohlraum verbunden ist. Zur Anbringung eines Gurtes 2 kann das erfindungsgemäße Verfahren durchgeführt werden, durch welches ein Gurt 2 an der Fahrzeuginnenraumkomponente 100 angebracht werden kann. In einem ersten Schritt wird die Abdeckung 1 aus dem Hohlraum entnommen, wobei der Durchführungsbereich 121 als Entnahmehilfe dient. Wie in der Zeichnung symbolisch dargestellt, kann beispielsweise ein Finger in die Öffnung zwischen Durchführungsbereich 121 und der umgebenden Oberfläche eingebracht werden und die Abdeckung 1 so in einfacher Weise gegen den Widerstand der beiden Befestigungselemente 13 aus dem Hohlraum entfernt werden. In einem zweiten Schritt kann nun bei entfernter Abdeckung 1 ein Gurt 2 angebracht werden, wobei während dieser Anbringung der Gurtanker im Hohlraum sehr gut erreichbar ist. In einem dritten Schritt wird schließlich die Abdeckung relativ zu dem in Figur 2 dargestellten Zustand gedreht. Diese Drehung erfolgt um eine Achse, welche senkrecht zur Auflagefläche orientiert ist. Die Abdeckung 1 wird so lange gedreht, bis der Durchführungsbereich 121 in vertikaler Richtung nach oben orientiert ist. In dieser Orientierung wird die Abdeckung 1 wieder in den Hohlraum eingesetzt. Dieser Zustand ist in Figur 3 dargestellt.

Figur 3 zeigt in einer schematischen Ansicht die Ausführungsform aus Figur 2 in der Benutzungsstellung. In der dargestellten Benutzungsstellung weist der Durchführungsbereich 121 in vertikaler Richtung nach oben. Der im Inneren des Hohlraums mit dem Gurtanker verbundene Gurt 2 ist in vertikaler Richtung auf der Rückseite der Fahrzeuginnenraumkomponente 100 nach oben geführt und kann auf der Vorderseite beispielsweise zur Befestigung einer Transporteinrichtung für Kinder genutzt werden. Der Gurt 2 ist ausgehend vom Inneren des Hohlraums durch die Öffnung zwischen dem Durchführungsbereich und der umgebenden Oberfläche geführt und somit frei beweglich. Auch in der dargestellten Benutzungsstellung schützt die Abdeckung 1 den Hohlraum und den darin befindlichen Gurtanker effektiv vor Verschmutzung und erlaubt gleichzeitig eine Durchführung des Gurtes 2.

### BEZUGSZEICHENLISTE:

- 1: Abdeckung
- 11: Anlagebereich
- 12: Öffnungsbereich
- 121: Durchführungsbereich
- 13: Befestigungselement
- 2: Gurt
- 100: Fahrzeuginnenraumkomponente
- DE: Durchführungsebene

## Patentansprüche

1. Abdeckung (1) für einen Hohlraum, in welchem ein Gurtanker angeordnet ist, umfassend
- einen Anlagebereich (11), welcher zur Anlage an einer den Hohlraum umgebenden Oberfläche einer Fahrzeuginnenraumkomponente (100) vorgesehen ist, wobei der Anlagebereich (11) auf seiner im Anwendungsfall zu der den Hohlraum umgebenden Oberfläche hin gewandten Innenseite eine Anlagefläche aufweist,
- zumindest einen Öffnungsbereich (12), dessen im Anwendungsfall zum Hohlraum hin gewandte Innenfläche in einer Richtung senkrecht zur Anlagefläche von dieser beabstandet ist, wobei der Anlagebereich (11) den Öffnungsbereich (12) bereichsweise umgibt und mit diesem verbunden ist, wobei in einem Durchführungsbereich (121) des Öffnungsbereiches (12) der Anlagebereich (11) den Öffnungsbereich (12) nicht umgibt und dieser Durchführungsbereich (121) den äußeren Rand der Abdeckung (1) bildet,
- zumindest zwei Befestigungselemente (13), die zur form- und/oder kraftschlüssigen Verbindung der Abdeckung (1) mit dem Hohlraum vorgesehen sind, wobei die Befestigungselemente (13) in auf der dem Öffnungsbereich (12) gegenüberliegenden Seite über die Anlagefläche vorstehen,
wobei eine Durchführungsebene (DE) den Durchführungsbereich (121) halbiert und senkrecht zur der an die an den Durchführungsbereich (121) angrenzenden Anlagefläche orientiert ist und die Befestigungselemente (13) auf einander gegenüberliegenden Seiten der Durchführungsebene (DE) im gleichen Abstand zur Durchführungsebene (DE) angeordnet sind,
wobei in einer Richtung parallel zur Durchführungsebene (DE) und parallel zur Anlagefläche die Abdeckung (1) auf einer ersten Seite durch den Durchführungsbereich (121) und auf einer der ersten Seite gegenüberliegenden zweiten Seite durch den Anlagebereich (11) begrenzt ist.

2. Abdeckung (1) nach Anspruch 1, bei der der Anlagebereich (11) und der Öffnungsbereich (12) zusammen eine gewölbte Schale bilden und sich die beiden Befestigungselemente (13) in die der Wölbung entgegengesetzte Richtung weg von der Anlagefläche erstrecken, wobei die Befestigungselemente (13) am Anlagebereich (11) oder am Öffnungsbereich (12) befestigt sind.

3. Abdeckung (1) nach einem der vorhergehenden Ansprüche 1 oder 2, bei der in einer Draufsicht auf die Anlagefläche der Anlagebereich (11) den Öffnungsbereich (12) in Umfangsrichtung um die Abdeckung (1) um zumindest 75% der Umfangslänge umgibt und der Durchführungsbereich (121) den Rand der Abdeckung (1) im restlichen Bereich der Umfangslänge bildet.

4. Abdeckung (1) nach einem der vorhergehenden Ansprüche 1 bis 3, bei der die Anlagefläche des Anlagebereiches (11) stetig in die Innenfläche des Öffnungsbereiches (12) übergeht.

5. Abdeckung (1) nach einem der vorhergehenden Ansprüche 1 bis 4, bei der der Abstand zwischen der Anlagefläche des Anlagebereiches (11) und der Innenfläche des Öffnungsbereiches (12) entlang der Durchführungsebene (DE) in Richtung hin zum Durchführungsbereich (121) zunimmt.

6. Abdeckung (1) nach einem der vorhergehenden Ansprüche 1 bis 5, bei der die Befestigungselemente (13) angrenzend an die Anlagefläche symmetrisch zur Durchführungsebene (DE) angeordnet sind oder welche komplett symmetrisch zur Durchführungsebene (DE) ausgeführt ist.

7. Abdeckung (1) nach einem der vorhergehenden Ansprüche 1 bis 6, bei der die Anlagefläche plan oder um zumindest eine Krümmungsachse, welche senkrecht zur Durchführungsebene (DE) orientiert ist, gekrümmt ausgeführt ist.

8. Fahrzeuginnenraumkomponente (100) mit einem Gurtanker, wobei der Gurtanker in einem nach außen offenen Hohlraum in der Fahrzeuginnenraumkomponente (100) angeordnet ist und dieser Hohlraum zumindest bereichsweise von einer Oberfläche der Fahrzeuginnenraumkomponente (100) umgeben ist, wobei eine Abdeckung (1) nach einem der vorhergehenden Ansprüche den Hohlraum zumindest bereichsweise verschließt,
wobei die Anlagefläche des Anlagebereiches (11) auf der den Hohlraum umgebenden Oberfläche aufliegt, die beiden Befestigungselemente (13) zumindest bereichsweise in den Hohlraum eingebracht sind und zwischen dem Durchführungsbereich (121) des Öffnungsbereiches (12) und der den Hohlraum umgebenden Oberfläche eine Öffnung vorhanden ist, welche zur Durchführung eines Gurtes und zur Entnahme der Abdeckung (1) aus dem Hohlraum vorgesehen ist.

9. Fahrzeuginnenraumkomponente (100) nach dem vorhergehenden Anspruch 8, bei der eine Benutzungsstellung der Abdeckung (1) vorgesehen ist, in der der Durchführungsbereich (121) in vertikaler Richtung nach oben weist und weiterhin eine Nichtbenutzungsstellung der Abdeckung (1) vorgesehen ist, in der der Durchführungsbereich (121) in vertikaler Richtung nach unten weist, wobei die Abdeckung (1) von der Benutzungsstellung in die Nichtbenutzungsstellung und umgekehrt durch eine Entnahme der Abdeckung (1) aus dem Hohlraum, eine Drehung der Abdeckung um eine Drehachse parallel zur Durchführungsebene (DE) und senkrecht zur Anlagefläche um 180° und ein Wiedereinsetzen in den Hohlraum überführbar ist.

10. Verfahren zur Anbringung eines Gurtes (2) an einer Fahrzeuginnenraumkomponente (100) nach einem der Ansprüche 8 oder 9, bei dem sich zu Beginn des Verfahrens die Abdeckung in einer Nichtbenutzungsstellung befindet, in der der Durchführungsbereich (121) in vertikaler Richtung nach unten weist, umfassend die Schritte:
A) Entnahme der Abdeckung (1) aus dem Hohlraum, wobei der Durchführungsbereich (121) als Entnahmehilfe dient,
B) Anbringung eines Gurtes (2) an dem im Hohlraum befindlichen Gurtanker,
C) Ausrichtung der Abdeckung derart, dass die Anlagefläche parallel zu der den Hohlraum umgebenden Oberfläche und der Durchführungsbereich (121) in vertikaler Richtung nach oben orientiert sind,
D) Wiedereinsetzen der Abdeckung, nach dem sich die Abdeckung (1) in einer Benutzungsstellung befindet, wobei bei dem Wiedereinsetzen die Befestigungselemente (13) in den Hohlraum eingeführt und die Anlagefläche in Kontakt mit der den Hohlraum umgebenden Oberfläche gebracht wird, wobei der Gurt (2) durch die Öffnung zwischen der den Hohlraum umgebenden Oberfläche und dem Durchführungsbereich (121) geführt wird.

## Claims

1. Cover (1) for a cavity, in which a belt anchor is arranged, comprising
- a contact area (11), which is provided to rest on a surface of a vehicle interior component (100) surrounding the cavity, wherein the contact area (11) has a contact surface on its inner side facing the surface surrounding the cavity during use,
- at least one opening area (12), the inner surface of which facing the cavity is spaced apart from the contact surface in a direction perpendicular to the latter during use, wherein the contact area (11) partially surrounds the opening area (12) and is connected thereto, wherein in a feed-through area (121) of the opening area (12), the contact area (11) does not surround the opening area (12) and this feed-through area (121) forms the outer edge of the cover (1),
- at least two fastening elements (13), which are provided to connect the cover (1) to the cavity in an interlocking and/or frictional manner, wherein the fastening elements (13) project beyond the contact surface on the side opposite the opening area (12),
wherein a feed-through plane (DE) bisects the feed-through area (121) and is oriented perpendicular to the contact surface adjoining the feed-through area (121) and the fastening elements (13) are arranged on opposite sides of the feed-through plane (DE) at the same distance from the feed-through plane (DE),
wherein, in a direction parallel to the feed-through plane (DE) and parallel to the contact surface, the cover (1) is delimited on a first side by the feed-through area (121) and on a second side opposite the first side by the contact area (11).

2. Cover (1) according to claim 1, in which the contact area (11) and the opening area (12) together form a curved shell and the two fastening elements (13) extend away from the contact surface in the direction opposite the curve, wherein the fastening elements (13) are attached to the contact area (11) or to the opening area (12).

3. Cover (1) according to any of the preceding claims 1 or 2, in which, in a plan view of the contact surface, the contact area (11) surrounds the opening area (12) in a circumferential direction around the cover (1) by at least 75% of the circumferential length and the feed-through area (121) forms the edge of the cover (1) in the remaining area of the circumferential length.

4. Cover (1) according to any of the preceding claims 1 to 3, in which the contact surface of the contact area (11) merges continuously into the inner surface of the opening area (12).

5. Cover (1) according to any of the preceding claims 1 to 4, in which the distance between the contact surface of the contact area (11) and the inner surface of the opening area (12) increase along the feed-through plane (DE) in a direction towards the feed-through area (121).

6. Cover (1) according to any of the preceding claims 1 to 5, in which the fastening elements (13) are arranged adjoining the contact surface symmetrically to the feed-through plane (DE) or which is designed completely symmetrically to the feed-through plane (DE).

7. Cover (1) according to any of the preceding claims 1 to 6, in which the contact surface is designed to be flat or curved about at least one axis of curvature, which is oriented perpendicular to the feed-through plane (DE).

8. Vehicle interior component (100) with a belt anchor, wherein the belt anchor is arranged in an outwardly open cavity in the vehicle interior component (100) and this cavity is at least partially surrounded by a surface of the vehicle interior component (100), wherein a cover (1) according to any of the preceding claims at least partially closes the cavity,
wherein the contact surface of the contact area (11) rests on the surface surrounding the cavity, the two fastening elements (13) are at least partially inserted into the cavity and there is an opening between the feed-through area (121) of the opening area (12) and the surface surrounding the cavity, which is provided for feeding a belt and for removing the cover (1) from the cavity.

9. Vehicle interior component (100) according to the preceding claim 8, in which a use position of the cover (1) is provided, in which the feed-through area (121) points upwards in a vertical direction and, furthermore, a non-use position of the cover (1) is provided, in which the feed-through area (121) points downwards in a vertical direction, wherein the cover (1) can be transferred from the use position to the non-use position and vice-versa by removing the cover (1) from the cavity, rotating the cover about an axis of rotation parallel to the feed-through plane (DE) and perpendicular to the contact surface by 180° and reinsertion into the cavity.

10. Method for attaching a belt (2) to a vehicle interior component (100) according to any one of claims 8 or 9, in which the cover is in a non-use position at the beginning of the method, in which the feed-through area (121) points downwards in a vertical direction, comprising the steps of:
A) Removing the cover (1) from the cavity, wherein the feed-through area (121) aids removal,
B) Attaching a belt (2) to the belt anchor located in the cavity,
C) Aligning the cover such that the contact surface is oriented parallel to the surface surrounding the cavity and the feed-through area (121) is oriented upwards in a vertical direction,
D) Reinserting the cover, after which the cover (1) is a use position, wherein, during reinsertion, the fastening elements (13) are inserted in the cavity and the contact surface is placed in contact with the surface surrounding the cavity, wherein the belt (2) is guided through the opening between the surface surrounding the cavity and the feed-through area (121).

## Revendications

1. Recouvrement (1) pour un espace creux, dans lequel un ancrage de courroie est agencé, comprenant
- une zone d'appui (11) qui est prévue pour l'appui sur une surface entourant l'espace creux d'un composant d'espace intérieur de véhicule (100), dans lequel la zone d'appui (11) présente une surface d'appui sur son côté intérieur tourné en cas d'application vers la surface entourant l'espace creux,
- au moins une zone d'ouverture (12), dont la surface intérieure tournée en cas d'application vers l'espace creux est espacée dans une direction perpendiculaire à la surface d'appui de celle-ci, dans lequel la zone d'appui (11) entoure la zone d'ouverture (12) par endroits et est reliée à celle-ci, dans lequel dans une zone de passage (121) de la zone d'ouverture (12), la zone d'appui (11) n'entoure pas la zone d'ouverture (12) et cette zone de passage (121) forme le bord extérieur du recouvrement (1),
- au moins deux éléments de fixation (13) qui sont prévus pour la liaison à complémentarité de formes et/ou à force du recouvrement (1) avec l'espace creux, dans lequel les éléments de fixation (13) dépassent de la surface d'appui sur le côté opposé à la zone d'ouverture (12),
dans lequel un plan de passage (DE) diminue de moitié la zone de passage (121) et est orienté perpendiculaire à la surface d'appui contiguë à la zone de passage (121) et les éléments de fixation (13) sont agencés sur des côtés opposés du plan de passage (DE) à distance égale du plan de passage (DE),
dans lequel le recouvrement (1) sur un premier côté est limité par la zone de passage (121) et sur un second côté opposé au premier côté par la zone d'appui (11) dans une direction parallèle au plan de passage (DE) et parallèle à la surface d'appui.

2. Recouvrement (1) selon la revendication 1, pour lequel la zone d'appui (11) et la zone d'ouverture (12) forment ensemble une coque incurvée et les deux éléments de fixation (13) s'étendent dans la direction opposée à la courbure loin de la surface d'appui, dans lequel les éléments de fixation (13) sont fixés à la zone d'appui (11) ou à la zone d'ouverture (12).

3. Recouvrement (1) selon l'une quelconque des revendications précédentes 1 ou 2, pour lequel dans une vue en élévation de la surface d'appui, la zone d'appui (11) entoure la zone d'ouverture (12) dans le sens périphérique autour du recouvrement (1) d'au moins 75 % de la longueur périphérique et la zone de passage (121) forme le bord du recouvrement (1) dans la zone restante de la longueur périphérique.

4. Recouvrement (1) selon l'une quelconque des revendications précédentes 1 à 3, pour lequel la surface d'appui de la zone d'appui (11) passe en permanence dans la surface intérieure de la zone d'ouverture (12).

5. Recouvrement (1) selon l'une quelconque des revendications précédentes 1 à 4, pour lequel la distance entre la surface d'appui de la zone d'appui (11) et la surface intérieure de la zone d'ouverture (12) augmente le long du plan de passage (DE) en direction de la zone de passage (121).

6. Recouvrement (1) selon l'une quelconque des revendications précédentes 1 à 5, pour lequel les éléments de fixation (13) sont disposés de manière contiguë à la surface d'appui en symétrie du plan de passage (DE) ou qui sont exécutés de manière complètement symétrique au plan de passage (DE).

7. Recouvrement (1) selon l'une quelconque des revendications précédentes 1 à 6, pour lequel la surface d'appui est exécutée de manière plane ou incurvée autour d'au moins un axe de courbure qui est orienté perpendiculairement au plan de passage (DE).

8. Composant d'espace intérieur de véhicule (100) avec un ancrage de courroie, dans lequel l'ancrage de courroie est agencé dans un espace creux ouvert vers l'extérieur dans le composant d'espace intérieur de véhicule (100) et cet espace creux est entouré au moins par endroits par une surface du composant d'espace intérieur de véhicule (100), dans lequel un recouvrement (1) selon l'une quelconque des revendications précédentes ferme au moins par endroits l'espace creux,
dans lequel la surface d'appui de la zone d'appui (11) repose sur la surface entourant l'espace creux, les deux éléments de fixation (13) sont introduits au moins par endroits dans l'espace creux et une ouverture est présente entre la zone de passage (121) de la zone d'ouverture (12) et la surface entourant l'espace creux, ouverture qui est prévue pour le passage d'une courroie et pour le retrait du recouvrement (1) de l'espace creux.

9. Composant d'espace intérieur de véhicule (100) selon la revendication précédente 8, pour lequel une position d'utilisation du recouvrement (1) est prévue, dans laquelle la zone de passage (121) est dirigée en direction verticale vers le haut et en outre une position de non utilisation du recouvrement (1) est prévue, dans laquelle la zone de passage (121) est dirigée en direction verticale vers le bas, dans lequel le recouvrement (1) peut être transféré de la position d'utilisation dans la position de non utilisation et inversement par un retrait du recouvrement (1) de l'espace creux, une rotation du recouvrement autour d'un axe de rotation parallèle au plan de passage (DE) et perpendiculaire à la surface d'appui de 180 ° et une réutilisation dans l'espace creux.

10. Procédé de montage d'une courroie (2) au niveau d'un composant d'espace intérieur de véhicule (100) selon l'une quelconque des revendications 8 ou 9, pour lequel au début du procédé, le recouvrement se trouve dans une position de non-utilisation, dans laquelle la zone de passage (121) est dirigée en direction verticale vers le bas, comprenant les étapes suivantes :
A) le retrait du recouvrement (1) de l'espace creux, dans lequel la zone de passage (121) sert d'aide au retrait,
B) le montage d'une courroie (2) au niveau de l'ancrage de courroie se trouvant dans l'espace creux,
C) l'orientation du recouvrement de telle manière que la surface d'appui soit orientée parallèlement à la surface entourant l'espace creux et la zone de passage (121) est orientée en direction verticale vers le haut,
D) la réutilisation du recouvrement, après quoi le recouvrement (1) se trouve dans une position d'utilisation, dans lequel lors de la réutilisation, les éléments de fixation (13) sont introduits dans l'espace creux et la surface d'appui est amenée en contact avec la surface entourant l'espace creux, dans lequel la courroie (2) est guidée à travers l'ouverture entre la surface entourant l'espace creux et la zone de passage (121).
